# EUROPEAN PATENT SPECIFICATION

(11) **EP 3 402 029 B1**
(45) Date of publication and mention of the grant of the patent: **19.01.2022**
(21) Application number: 18169609.7
(22) Date of filing: 26.04.2018
(51) Int. Cl.: H02J 3/18, H02J 7/34

(54) **SYSTEM FOR IMPROVING QUALITY OF ELECTRICAL ENERGY**
SYSTEM ZUR VERBESSERUNG DER QUALITÄT DER ELEKTRISCHEN ENERGIE
SYSTÉME POUR AMÉLIORER LA QUALITÉ DE L'ÉNERGIE ÉLECTRIQUE

(30) Priority: 09.05.2017 PL 42154317
(43) Date of publication of application: 14.11.2018
(73) Proprietor: Akademia Gorniczo-Hutnicza im. Stanislawa Staszica w Krakowie, 30-059 Krakow (PL)
(72) Inventor: DZIADECKI, Aleksander, 31-417 Kraków (PL); GRZEGORSKI, Janusz, 31-636 Kraków (PL); SKOTNICZNY, Józef, 31-422 Kraków (PL)
(74) Representative: Wlasienko, Jozef

(56) References cited:
- CN-A- 102 097 793
- CN-A- 102 231 522
- CN-A- 106 099 990

## Description

The present invention relates to a system for improving quality of electrical energy. This system allows to reduce energy losses in power electronic systems that have been used so far for improving quality of electrical energy and for providing proper voltage parameters. These are compensator systems of different kinds, such as active parallel compensators (APC) also referred to as active power filters (APF), dynamic voltage restorers (DVR), unified power quality conditioners (UPQC) applicable in industrial power electronic systems and wherever high quality energy is required.

From CN102097793 a power quality conditioning device for a power distribution system is known, which comprises current limiting inductors, transformers and connecting inductors. Under the conditions of linear and nonlinear loads, the device uses voltage and current sources connected to the circuit in series and in parallel. The current limiting inductors are connected in parallel with switches for switching different running modes of the device. The device comprises a fault current limiter, a dynamic voltage restorer and an active power filter. The device limits a short circuit current, compensates voltage sag by the series-wound current converter. When operated as the failure current limiter, the device does not consume active power and has the advantage of saving energy. The device satisfies the needs of different loads in power supply voltages, effectively prevents the nonlinear load from polluting the system and reduce the short circuit current. This prior art is reflected by the preamble of the appended claim.

Known compensators having the purpose of improving quality of electrical energy are connected to a power network via LCL or LCLR circuits which limit passing of high-frequency harmonic currents and voltages to this network that are associated with the pulse width modulation used in inverters of these compensators while providing a low attenuation of harmonic currents and voltages within the compensated range. A resonant frequency of these circuits should be therefore sufficiently high to ensure the required pass band corresponding to the range of compensated harmonic currents and voltages. This requires the use of sufficiently high operating frequency of a pulse modulation system of the inverters in order to ensure the system stability or the provision of attenuation of the resonance occurring in filters by means of additional resistive elements for energy dissipation. The last mentioned solution, despite the advantages of a simpler control system of inverter systems, is reluctantly used due to considerable energy losses in filter resistive elements of these systems leading to considerable efficiency reduction of the compensators.

A system according to the invention is defined in the appended claim. It is composed of an active parallel compensator system comprising a coupling filter in each phase conductor and a AC/DC power electronic converter, and/or of a dynamic voltage restorer system comprising in each phase conductor a transformer and a coupling filter and AC/DC power electronic converters. The system also comprises an energy storage in the form of a storage capacitor included at DC terminals of said power electronic converters.

The essence of the solution is that in each phase conductor in the LCLR type coupling filers of the active parallel compensator system, as well as in the LCLR coupling filters of the dynamic voltage restorer system each of resistors is replaced by an energy recovery system. Each of these energy recovery systems is composed of a half-bridge switch system, connected by means of a choke and a voltage and current measurement block to the coupling filter in place of a replaced resistor. Signal conductors of each voltage and current measurement block are connected to the switches in each energy recovery system respectively.

Moreover, in the active parallel compensator circuit, two capacitors connected in series are coupled to the two remaining outputs of each of the power electronic switches so as to form an intermediate energy storage, which by means of a power electronic converter, with an input circuit being galvanically isolated from a DC/DC output circuit, is connected to terminals of a storage capacitor. In the active parallel compensator circuit, a common point of the capacitors that form intermediate energy storages is connected to a neutral conductor of a power network and by means of the voltage and current measurement blocks to one of the outputs of each coupling filter.

Whereas, separately for each phase, two capacitors connected in series are coupled to the two remaining outputs of each of the power electronic switches present in the dynamic voltage restorer system circuit so as to form intermediate energy storages. These capacitors by means of individual power electronic converters, with an input circuit being galvanically isolated from a DC/DC output circuit, are connected to the storage capacitor. In the dynamic voltage restorer system circuit, for each phase respectively, a common point of the capacitors that form intermediate energy storages, is connected by means of the voltage and current measurement block to one of the outputs of the coupling filter.

The advantage of the system, according to the solution presented herein and allowing to achieve resonance attenuation in coupling circuits of active parallel compensators and dynamic voltage restorer systems, is the simplification of a control system of these systems while significantly reducing energy losses due to a possibility of recovering electrical energy used to performing the attenuation process. This solution provides a high output current dynamics and effective resonance attenuation in coupling circuits.

The subject of the invention is illustrated in a drawing in the form of a system block diagram.

A system is composed of an active parallel compensator system (APC) comprising a power electronic converter 6 connected to a power network 1 or a load 2 by means of LCLR coupling filters 3, 4, 5 and of a dynamic voltage restorer system (DVR) comprising power electronic converters 10, 11, 12 connected to the power network 1 or the load 2 by means of coupling filters LCLR 7, 8, 9, respectively, and transformers Tr1, Tr2, Tr3, respectively. These systems have a common DC circuit in which a storage capacitor C1 acts as an energy storage. In each of the LCLR type filters, by means of which these systems are connected to the power network or to the load, a resistor is replaced by an energy recovery system. An effect of this energy recovery system in the filter circuit is similar to a load realised by a resistor, but the energy resulting from functioning of this system is not lost in the form of heat, as in a conventional resistor, but after being reduced by energy losses due to the processing, it is transferred to the energy storage, i.e., the storage capacitor C1.

The energy recovery system connected in place of a replaced resistor in the LCLR type coupling filers 3, 4, 5 of the active parallel compensator is composed of half-bridge power electronic switches 16, 17, 18, each of which is connected by means of chokes D1, D2, D3 and current and voltage measurement blocks 13, 14, 15, respectively, to outputs of the filters 3, 4, 5 in place of replaced resistors. Measurement signals from the current and voltage measurement blocks 13, 14, 15 are transmitted respectively to control blocks 19, 20, 21 of the power electronic switches 16, 17, 18, respectively. These switches are controlled in such a way that the mean value of input current for the pulse repetition period of each of the switches is proportional to the mean value of voltage in place of a replaced resistor, in a given pulse repetition period of each of the switches such as to meet the condition of the product of this current value, for the pulse repetition period of each of the switches, and of the required resistance setpoint value equal to the resistance of the replaced resistor, being equal to the mean value of input voltage, for the pulse repetition period of each of the switches. A pulse repetition period of the power electronic switches 16, 17, 18 is set such as to be many times smaller than a period of the highest significant harmonic component in the output voltage curve present in place of a replaced resistor. Energy drawn from the circuits of the coupling filters 3, 4, 5 in the pulse controlling process of the power electronic switches 16, 17, 18 is transferred to capacitors C2, C3 connected in series and acting as an intermediate energy storage, wherefrom via a power electronic converter 22 it is returned to the storage capacitor C1, acting as an energy storage of the overall system for improving quality of electrical energy. The power electronic converter 22 is a DC/DC converter which transfers energy from the capacitors C2, C3 acting as intermediate energy storages in the circuit to the main energy storage, i.e. the storage capacitor C1, while providing galvanic isolation between mentioned circuits. A common point of the capacitors C2, C3 is connected to a neutral conductor N of the power network and by means of the voltage and current measurement blocks 13, 14, 15 to one of the outputs of the coupling filters 4, 5, 6.

Similarly to the active parallel compensator system, in the second part of the system for improving quality of electrical energy comprising the dynamic voltage restorer system, energy recovery systems are connected in place of a replaced resistor in the LCLR type coupling filers 7, 8, 9 and are composed of half-bridge power electronic switches 26, 27, 28, each of which is connected by means of chokes D4, D5, D6 and current and voltage measurement blocks 23, 24, 25, respectively, to outputs of the filters 7, 8, 9 in place of replaced resistors. Measurement signals from the current and voltage measurement blocks 23, 24, 25 are respectively connected to control blocks 29, 30, 31 of power electronic switches 26, 27, 28, respectively. These switches are controlled in such a way that the mean value of input current for the pulse repetition period of each of the switches is proportional to the mean value of voltage in place of a replaced resistor, in a given pulse repetition period of each of the switches such as to meet the condition of the product of this current value, for the pulse repetition period of each of the switches, and of the required resistance setpoint value equal to the resistance of the replaced resistor, being equal to the mean value of input voltage, for the pulse repetition period of each of the switches. A pulse repetition period of the power electronic switches 26, 27, 28 is set such as to be many times smaller than a period of the highest significant harmonic component in the output voltage curve present in place of a replaced resistor.

Energy drawn from the circuit of the coupling filter 7 in the pulse controlling process of power electronic switches 26 is transferred to capacitors C4, C5 connected in series and acting as an intermediate energy storage, wherefrom via a power electronic converter 32, DC/DC, it is returned to the storage capacitor C1, acting as an energy storage of the overall system for improving quality of electrical energy. A common point of the capacitors C4, C5 is connected to one of the outputs of the coupling filter 7 by means of the voltage and current measurement block 23.

Energy drawn from the circuit of the coupling filter 8 in the pulse controlling process of power electronic switches 27 is transferred to capacitors C6, C7 connected in series and acting as an intermediate energy storage, wherefrom via a power electronic converter 33, DC/DC, it is returned to the storage capacitor C1, acting as an energy storage of the overall system for improving quality of electrical energy. A common point of the capacitors C6, C7 is connected to one of the outputs of the coupling filter 8 by means of the voltage and current measurement block 24,

Energy drawn from the circuit of the coupling filter 9 in the pulse controlling process of power electronic switches 28 is transferred to capacitors C8, C9 connected in series and acting as an intermediate energy storage, wherefrom via a power electronic converter 34, DC/DC, it is returned to the storage capacitor C1, acting as an energy storage of the overall system for improving quality of electrical energy. A common point of the capacitors C8, C9 is connected to one of the outputs of the coupling filter 9 by means of the voltage and current measurement block 25.

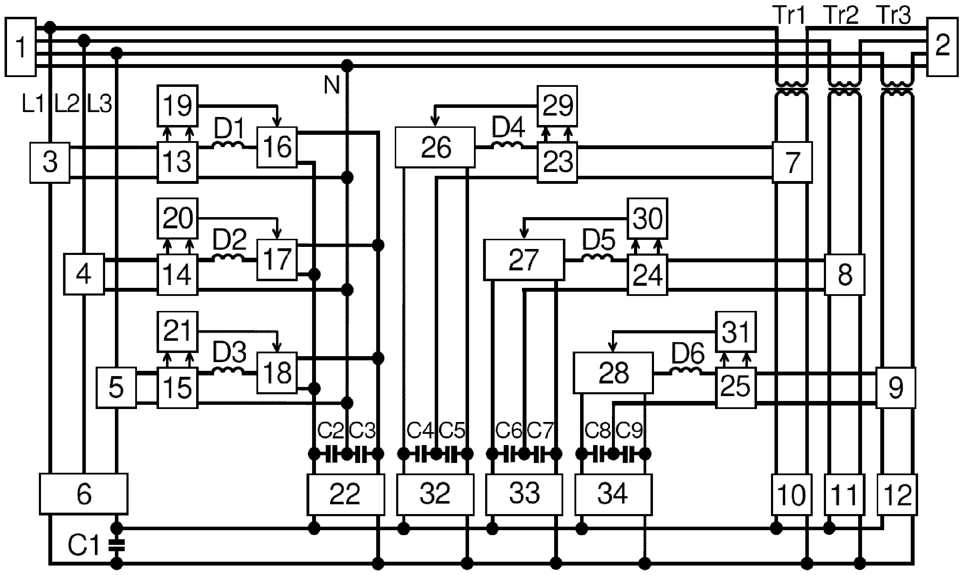

In the presented systems, known systems (not illustrated in the drawing) for precharging the capacitors C2 - C9 to the voltage level present on them during a normal system operation have been used, ensuring the correct system operation during start-up when voltages on these capacitors are equal to zero.

In the presented exemplary solution, the system was used for resonance attenuation in the coupling circuit filters 3, 4, 5, 7, 8, 9 of the active parallel compensator APC and of the dynamic voltage restorer system DVR with voltage source inverters VSI connected to a supply network by means of coupling circuits requiring the use of a 7.5 Ohm resistor in each filter branch. To the outputs of the power electronic switches 16, 17, 18, 26, 27, 28 electrolytic capacitors C2 - C9, each having a capacitance of 800 µF for a voltage of 400 V, and chokes D1 - D6 having an inductance of 900 µH have been connected. As power electronic switches C2M0160120D transistors have been used which were keyed by control blocks 16, 17, 18, 26, 27, 28 with a frequency of 64 kHz. An energy transfer from the capacitors C2 - C9 to the capacitor C1 has been effected by means of DC/DC power electronic converters with a galvanic isolation from a voltage level of 270 V to a voltage level of 800 V.

### List of reference numerals

- 1, 2: power network or load
- 3, 4, 5: coupling filters of the active parallel compensator
- 6: power electronic converter of AC/DC type
- 7, 8, 9: coupling filters of the dynamic voltage restorer system
- 10, 11, 12: power electronic converters of AC/DC type
- C1: storage capacitor

in an energy recovery circuit of the active parallel compensator
   - 13,14,15: current and voltage measurement blocks
   - 16, 17, 18,: power electronic switches
   - 19,20,21: control blocks
   - D1, D2, D3: chokes
   - C2, C3: capacitors that form an intermediate energy storage
   - 22: power electronic converter with an input circuit being galvanically isolated from a DC/DC output circuit
in an energy recovery circuit dynamic voltage restorer
   - 23, 24, 25: current and voltage measurement blocks
   - 26, 27, 28,: power electronic switches
   - 29, 30, 31: control blocks
   - D4, D5, D6: chokes
   - C4 - C9: capacitors that form intermediate energy storages
   - 32, 33, 34: power electronic converters with an input circuit being galvanically isolated from a DC/DC output circuit
   - Tr1, Tr2, Tr3: transformers

## Claims

1. system for improving quality of electrical energy composed of an active parallel compensator system comprising a LCLR coupling filter (3, 4, 5) in each phase conductor and an AC/DC power electronic converter (6), and of a dynamic voltage restorer system comprising in each phase conductor a transformer (Tr1, Tr2, Tr3) and a LCLR coupling filter (7, 8, 9) and AC/DC power electronic converters (10, 11, 12), as well as an energy storage in the form of a storage capacitor (C1) included at DC terminals of said power electronic converters (6; 10, 11, 12), **characterised in that** in each phase conductor (L1, L2, L3) in the LCLR type coupling filters (3, 4, 5) of the active parallel compensator system and the LCLR type coupling filters (7, 8, 9) of the dynamic voltage restorer system, each of resistors is replaced by an energy recovery system, wherein each of these energy recovery systems is composed of a half-bridge system of power electronic switches (16, 17, 18; 26, 27, 28) connected by means of a choke (D1, D2, D3; D4, D5, D6) and a voltage and current measurement block (13, 14, 15; 23, 24, 25) to the coupling filter (3, 4, 5; 7, 8, 9) in place of a replaced resistor and signal conductors of the voltage and current measurement block (13, 14, 15; 23, 24, 25) are connected to the power electronic switch (16, 17, 18; 26, 27, 28) in each energy recovery system respectively; moreover, in the active parallel compensator system, capacitors (C2, C3) connected in series are coupled to the two remaining outputs of each of the power electronic switches (16, 17, 18) so as to form an intermediate energy storage, wherein the latter, by means of a power electronic converter (22), with an input circuit being galvanically isolated from a DC/DC output circuit, is connected to terminals of the storage capacitor (C1), and a common point of the capacitors (C2, C3) is connected to a neutral conductor (N) of a power network and by means of the voltage and current measurement blocks (13, 14, 15) to one of the outputs of the coupling filters (3, 4, 5), wherein in the dynamic voltage restorer system circuit, separately for each phase, capacitors connected in series (C4, C5; C6, C7; C8, C9) are coupled to the two remaining outputs of each of the power electronic switches (26, 27, 28) so as to form intermediate energy storage elements which by means of individual power electronic converters (32, 33, 34), with an input circuit being galvanically isolated from a DC/DC output circuit, are connected to the storage capacitor (C1), and wherein a common point of the capacitors (C4, C5; C6, C7; C8, C9), for each phase respectively, is connected by means of the voltage and current measurement block (23, 24, 25) to one of the outputs of the coupling filter (7, 8, 9).

## Patentansprüche

1. System zur Verbesserung der Qualität elektrischer Energie bestehend aus einem aktiven Parallelkompensatorsystem mit einem LCLR-Kopplungsfilter (3, 4, 5) in jedem Phasenleiter und einem leistungselektronischen AC/DC-Wandler (6) und einem dynamischen Spannungswiederherstellungssystem bestehend in jedem Phasenleiter aus einem Transformator (Tr1, Tr2, Tr3) und einem LCLR-Koppelfilter (7, 8, 9) und AC/DC-Leistungselektronischen Wandlern (10, 11, 12) sowie einem Energiespeicher in der Form von einem an DC-Anschlüssen der leistungselektronischen Wandler (6; 10, 11, 12) enthaltenen Speicherkondensators (C1), **dadurch gekennzeichnet, dass** in jedem Phasenleiter (L1, L2, L3) in den LCLR-Kopplungsfiltern (3, 4 , 5) des aktiven Parallelkompensatorsystems und in den LCLR-Kopplungsfiltern (7, 8, 9) des dynamischen Spannungswiederherstellungssystems, jeder der Widerstände durch ein Energierückgewinnungssystem ersetzt ist, wobei jedes dieser Energierückgewinnungssysteme aus ein Halbbrückensystem aus leistungselektronischen Schaltern (16, 17, 18; 26, 27, 28), die mittels einer Drossel (D1, D2, D3; D4, D5, D6) und einem Spannungs- und Strommessblock (13, 14, 15; 23, 24, 25) an das Koppelfilter (3, 4, 5; 7, 8, 9) verbunden sind, zusammengesetzt ist, und anstelle eines getauschten Widerstandes und Signalleiter des Spannungs- und Strommessblocks (13, 14, 15; 23, 24, 25) jeweils mit dem leistungselektronischen Schalter (16, 17, 18; 26, 27, 28) in jedem Energierückgewinnungssystem verbunden sind; außerdem sind bei dem aktiven Parallelkompensatorsystem in Reihe geschaltete Kondensatoren (C2, C3) mit den beiden übrigen Ausgängen von jedem der leistungselektronischen Schalter (16, 17, 18) gekoppelt, um einen Energiezwischenspeicher zu bilden, wobei der letztere mittels eines leistungselektronischen Wandlers (22) mit einem von einem DC/DC-Ausgangskreis galvanisch getrennten Eingangskreis mit Anschlüssen des Speicherkondensators (C1) verbunden ist und ein gemeinsamer Punkt der Kondensatoren (C2, C3) mit einem Neutralleiter (N) eines Stromnetzes und über die Spannungs- und Strommessblöcke (13, 14, 15) mit einem der Ausgänge der Koppelfilter (3, 4, 5) verbunden ist, wobei in der dynamischen Spannungswiederherstellersystemschaltung, getrennt für jede Phase, in Reihe geschaltete Kondensatoren (C4, C5; C6, C7; C8, C9) mit den zwei verbleibenden Ausgängen von jedem der leistungselektronischen Schalter (26, 27, 28) gekoppelt sind um Energiezwischenspeicherelemente zu bilden, die mittels einzelner leistungselektronischen Wandler (32, 33, 34), wobei ein Eingangskreis von einem DC/DC-Ausgangskreis galvanisch getrennt ist, mit dem Speicherkondensator (C1) verbunden sind, und wobei ein gemeinsamer Punkt der Kondensatoren (C4, C5; C6, C7; C8, C9) jeweils für jede Phase mittels des Spannungs- und Strommessblocks (23, 24, 25) mit einem der Ausgänge des Koppelfilters (7, 8, 9) verbunden ist.

## Revendications

1. Système pour amélioration de la qualité de l'énergie électrique composé d'un système compensateur parallèle actif comprenant un filtre de couplage LCLR (3, 4, 5) dans chaque conducteur de phase et un convertisseur électronique de puissance AC/DC (6), et d'un système dynamique de restauration de tension comprenant dans chaque conducteur de phase un transformateur (Tr1, Tr2, Tr3) et un filtre de couplage LCLR (7, 8, 9) et des convertisseurs électroniques de puissance AC/DC (10, 11, 12), ainsi qu'un réservoir d'énergie sous la forme d'un condensateur de stockage (C1) inclus aux bornes à courant continu desdits convertisseurs électroniques de puissance (6; 10, 11, 12), **caractérisé en ce que** dans chaque conducteur de phase (L1, L2, L3) dans les filtres de couplage de type LCLR (3, 4, 5) du système de compensation parallèle actif et des filtres de couplage de type LCLR (7, 8, 9) du système dynamique de restauration de tension, chacune des résistances est remplacée par un système de récupération d'énergie, dans lequel chacun de ces systèmes de récupération d'énergie étant composé d'un système en demi-pont de commutateurs électroniques de puissance (16, 17, 18; 26, 27, 28) conectés au moyen d'une self (D1, D2, D3 ; D4, D5, D6) et un bloc de mesure une tension et un courant (13, 14, 15; 23, 24, 25) au filtre de couplage (3, 4, 5; 7, 8, 9) à la place d'une résistance remplacée et des conducteurs de signaux du bloc de mesure de tension et de courant (13, 14, 15; 23, 24, 25) sont connectés au commutateur électronique de puissance (16, 17, 18; 26, 27, 28) respectivement dans chaque système de récupération d'énergie; de plus, dans le système compensateur parallèle actif, des condensateurs (C2, C3) connectés en série sont couplés aux deux sorties restantes de chacun des commutateurs électroniques de puissance (16, 17, 18) de manière à former un reservoir intermédiaire d'énergie, dans lequel ce dernier, au moyen d'un convertisseur électronique de puissance (22), avec une circuit d'entre étant isolé galvaniquement d'un circuit de sortie DC/DC, est connecté à des bornes du condensateur de stockage (C1), et un point commun des condensateurs (C2, C3) est connecté à un conducteur neutre (N) d'un réseau énergétique et au moyen des blocs de mesure de tension et de courant (13, 14, 15) à l'une des sorties des filtres de couplage (3, 4, 5), dans lequel dans le circuit du système dynamique de restauration de tension, séparément pour chaque phase, des condensateurs connectés en série (C4, C5; C6, C7; C8, C9) sont couplés aux deux sorties restantes de chacun des commutateurs électroniques de puissance (26, 27, 28) de manière à former des éléments intermédiaires de stockage d'énergie qui, au moyen de individuels convertisseurs électroniques de puissance (32, 33, 34), avec un circuit d'entrée étant isolé galvaniquement d'un circuit de sortie DC/DC, sont connectés au condensateur de stockage (C1), et dans lequel un point commun des condensateurs (C4, C5; C6, C7; C8, C9), respectivement pour chaque phase, est connecté au moyen du bloc de mesure de tension et de courant (23, 24, 25) à l'un des sorties du filtre de couplage (7, 8, 9).
